# EUROPÄISCHE PATENTSCHRIFT

(11) **EP 0 611 349 B1**
(45) Veröffentlichungstag und Bekanntmachung des Hinweises auf die Patenterteilung: **28.02.1996**
(21) Anmeldenummer: 92922571.2
(22) Anmeldetag: 30.10.1992
(51) Int. Cl.: B60T 8/36, B60T 13/68, F16K 47/00

(54) **DRUCKSTEUERVENTIL**
PRESSURE-CONTROL VALVE
SOUPAPE MODULATRICE DE PRESSION

(30) Priorität: 12.11.1991 DE 4137123
(43) Veröffentlichungstag der Anmeldung: 24.08.1994
(73) Patentinhaber: ITT Automotive Europe GmbH, D-60488 Frankfurt am Main (DE)
(72) Erfinder: REINARTZ, Hans-Dieter, D-6000 Frankfurt/Main 50 (DE); VOLZ, Peter, D-6100 Darmstadt (DE); BECK, Erhard, D-6290 Weilburg (DE)
(86) Internationale Anmeldenummer: EP9202492
(87) Internationale Veröffentlichungsnummer: WO9309982

(56) Entgegenhaltungen:
- EP-A- 0 317 304
- DE-A- 2 064 562
- US-A- 3 521 853
- US-A- 4 108 210
- US-A- 4 762 146

## Beschreibung

Die Erfindung betrifft ein Drucksteuerventil, insbesondere Elektromagnetventil für schlupfgeregelte Bremsanlagen für Kraftfahrzeuge.

In der nachveröffentlichten nationalen Druckschrift DE-A- 41 03 365 ist bereits ein von einem Elektromagneten betätigbares Drucksteuerventil beschrieben, dessen stößelförmiges Ventilschließglied den Durchlaß zwischen einem ersten und einem weiteren Druckmittelanschluß im Bereich einer trichterförmigen Ventilsitzfläche hubabhängig steuert. Zur Gewährleistung einer druckausgeglichenen Ventilbetätigung verbindet ein Druckausgleichskanal den mittels Dichtungspaket abgeschirmten Magnetankerraum mit den vom Ventilschließglied zu schaltenden Druckmittelanschlüssen.

Als nachteilig anzusehen ist bei der bekannten Ventilausführung dessen Geräuschverhalten und die stoßweise hydraulische Beanspruchung des Dichtungspakets während den impulsartigen, Körperschall erzeugenden Ventilschaltphasen, das auf das Anschlagen des Ventilschließgliedes am Ventilsitz und auf das instationäre Strömungsverhalten und damit auf die diskontinuierliche Umströmung des Ventilschließgliedes infolge der vom Ringspalt abhängigen Drosseleffekte, sowie der binären Ventilschaltstellungen zurückzuführen sind.

Die US-A-4,762,146 beschreibt ein Hydraulikventil nach dem Oberbegriff des Anspruchs 1, das in einem Ventilgehäuse ein Einsatzteil aufnimmt, welches an seiner Peripherie mit einem porösen Ringteil versehen ist. Im Einsatzteil befindet sich ein axial beweglich geführtes Ventilschließglied, das in Abhängigkeit von seiner Hubstellung über baulich und wirkungsmäßig nacheinander im Einsatzteil angeordnete Druckmittelkanäle sowie Blenden einen Druckmittelstrom vom Einlaßkanal zum porösen Ringteil ermöglicht. Dem porösen Ringteil nachgeschaltet schließt sich dem Ventilgehäuse ein Druckmittelauslaß an. Das über den Einlaßkanal zu den mit Blenden versehenen Querkanälen strömende Druckmittel erfährt eine Drosselung, die das Druckmittel gedrosselt im stromabwärts der nacheinander geöffneten Druckmittelwege in das poröse Ringteil führt. Es erfolgt eine mehrstufige Widerstandserhöhung und Druckerhöhung vor dem Ventilschließglied, die mangels einer hydraulisch druckausgeglichenen Ventilbetätigung zu relativ hohen Stellkräften für das Ventilschließglied führen kann.

Aus der US-A-4,108,210 ist ein Hydraulikventil bekannt, dessen Ventilstößel mehrere in einem Einsatzteil des Ventilgehäuses angeordnete Blendenbohrungen nacheinander öffnet oder schließt, so daß von einem radial in Richtung der Blenden in das Ventilgehäuse einmündenden Druckmitteleinlaßkanal einer Druckmittelverbindung, nach Betätigung des Ventilstößels, zum Auslaßkanal führt. Zur druckausgeglichenen Ventilbetätigung ist der Ventilstößel von einem Quer- und Längskanal durchdrungen, die den Querschnitt des Ventilstößels schwächen und infolge der notwenigen Ringabdichtung an der Mantelfläche des Ventilstößels die Reibfläche vergrößern, womit durch die erforderliche Länge und Dicke des Ventilstößels die Betätigungskraft ansteigt.

Ein mit einer Drossel versehenes Sperrventil geht aus der US-A-3,521,853 hervor. Zum Zwecke der Drosselung wird der zwischen dem Ventilschließglied und dem Ventilsitz gelegene Querschnitt während der Schließbewegung des Ventils kontinuierlich verkleinert, wozu entweder der Ventilsitz oder das Ventilschließglied mit einer den Druckmittelstrom verkleinernden Querschnittsfläche versehen werden. Damit erfolgt eine kontinuierliche zunehmende Drosselung im Durchlaßquerschnitt während der Schließbewegung des Ventilschließgliedes, bis die Mantelfläche des Ventilschließgliedes gänzlich den Druckmitteldurchlaß überdeckt. Trotz der hierbei vollzogenen Drosselung können infolge des am Schaft des Ventilschließgliedes vorgesehenen Anschlagteils beim Schließen des Ventils Schlaggeräusche auftreten, die auf der Kontaktierung des ringförmigen Anschlags am Ventilsitz zurückzuführen sind. Die für die Betätigung des Ventilschließgliedes erforderlichen Stellkräfte schwanken in Abhängigkeit von der Druckänderung während des Ventilhubes.

Daher soll ein Drucksteuerventil geschaffen werden, das einerseits mit minimalen Stellkräften und damit kleinem Ankerstrom zu betätigen ist, andererseits soll jedoch auch eine geräuscharmes Schalten des Ventiles gewährleistet sein.

Erfindungsgemäß wird die Aufgabe durch die im Patentanspruch 1 angegebenen Merkmale gelöst.

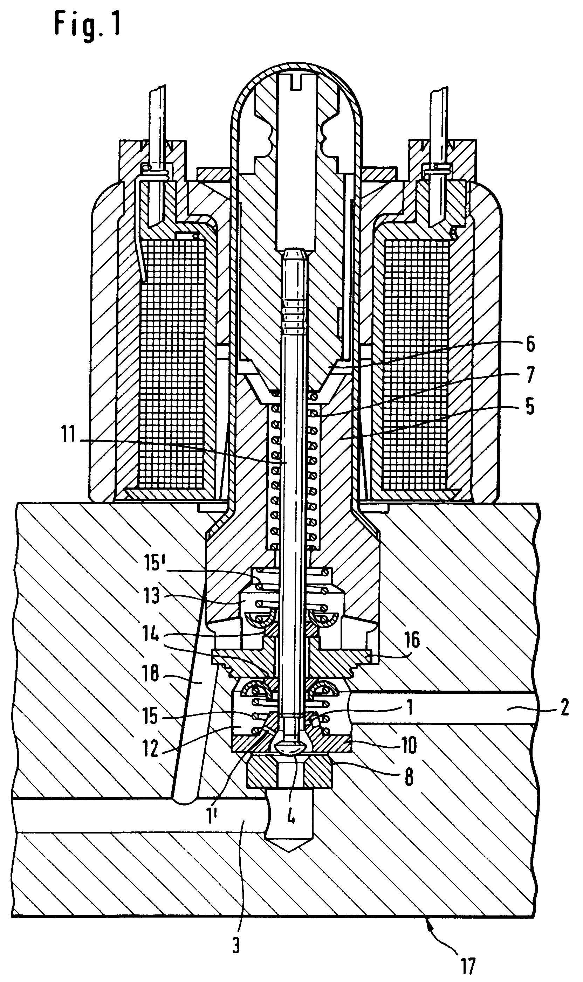

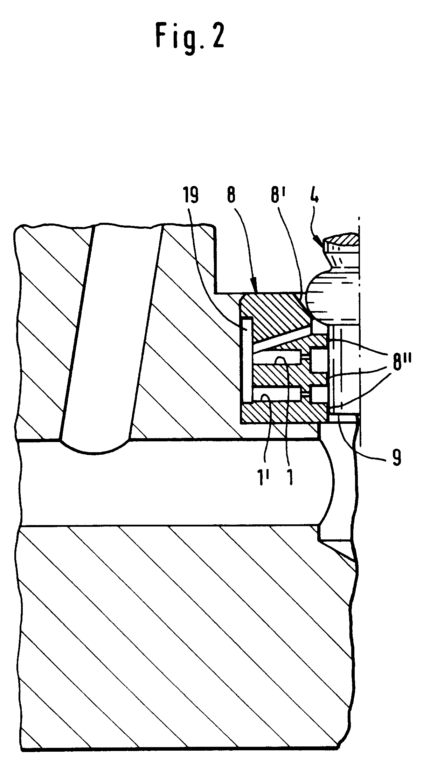

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nchfolgend anhand zweier Zeichnungen (Figur 1 und 2) näher dargestellt und erläutert werden.

Es zeigt:
- Fig. 1: eine Gesamtansicht eines elektromagnetisch betätigbaren Drucksteuerventils im Längsschnitt, mit im Ventilsitzkörper angeordneten Druckmittelübergangskanälen,
- Fig. 2: eine vorteilhafte Ausführungsform zur Anordnung von Druckmittelübergangskanälen innerhalb eines im Halbschnitt vergrößert dargestellten Ventilsitzes.

Die Fig. 1 zeigt ein in der elektromagnetisch stromlosen Grundstellung auf permaneten Druckmitteldurchlaß geschalteten, ein Ventilschließglied 4 aufweisenden Ventilstößel 11, der die Druckmittelverbindung zwischen einer Druckmittelquelle, z. B. von einem Bremsdruckgeber kommend, über einen ersten Druckmittelanschluß 2 zum verbraucherseitigen, beispielsweise radbremsseitig angeschlossenen zweiten Druckmittelanschluß 3 steuert. Ein den ersten mit dem zweiten Druckmittelanschluß 2, 3 verbindender zweiter Druckraum 12 nimmt ein den Ventilstößel 11 gegenüber einem ersten Druckraum 13 abdichtendes Dichtelement 14 auf, das mittels einer im zweiten Druckraum 12 angeordneten Druckfeder 15 an einer Stirnfläche eines Führungsteils 16 gehalten ist. Das zwischen der abgesetzten Öffnung innerhalb des Ventilgehäuses 17 und dem Magnetkern 5 mittels Verstemmung gehaltene Führungsteil 16 weist eine vorzugsweise scheibenförmige Gestalt auf, dessen koaxial angeordnete Bohrung spielbehaftet vom Ventilstößel 11 durchdrungen ist. In dem zum Führungsteil 16 zugewandten Abschnitt des Magnetkerns 5 befindet sich eine Stufenbohrung zur Aufnahme einer zweiten Feder 15', die analog zur ersten Feder 15 auf der entgegengesetzten Stirnfläche des Führungsteils 16 ein Dichtelement 14 positioniert. Damit ist gewährleistet, daß trotz einer relativ großzügig dimensionierten Spielpassung zwischen dem Ventilstößel 11 und der Bohrung des Führungsteils 16 eine ausreichende Dichtwirkung zwischen dem ersten und dem zweiten Druckraum 12, 13 zustandekommt. Dabei erstreckt sich der dem Magnetkern 5 zugewandte erste Druckraum 13 entlang dem Ventilstößel 11 bis in den Hohlraum des Ventildoms. Über entsprechende quer verlaufende Ausnehmungen an der das Führungsteil 16 berührenden Stirnfläche des Magnetkerns 5 sowie über eine den ersten Druckraum 13 mit einem Bypasskanal 18 verbindende ringförmige Ausnehmung innerhalb des Ventilgehäuses 17 ist ein permanter Druckausgleich zwischen dem verbraucherseitigen zweiten Druckmittelanschluß 3 und dem ersten Druckraum 13 gegeben. Die Dichtelemente bestehen Vorzugsweise aus Polytetraflurethylen oder einem vergleichbaren Werkstoff. Die Dichtelemente 14 können sich zur Selbstzentrierung des Ventilstößels 11 gegenüber dem Ventilsitz 8 in radialer Richtung verschieblich auf der Stirnfläche des Führungsteils 16 bewegen. Diese freie Beweglichkeit wird unter anderem durch die querkraftfreie Richtungselastizität der Druckfeder 15 begünstigt. Unter Einwirkung des hydraulischen Drucks sind die Dichtelemente 14 selbstabdichtend ausgelegt, so daß mit bereits relativ kleinen Federkräften eine einwandfreie hydraulische Dichtheit sowie minimale Reibkräfte entstehen. Durch die außerordentlich kleinen Reibkräfte ergeben sich ausgesprochen gute radiale Gleitbewegungsverhältnisse der Dichtelemente zur Realisierung der gewünschten Selbstzentrierung. Das pilzförmige Ventilschließglied 4 ist innerhalb eines kegelstumpfförmigen Ventilstützkörpers 10 geführt. Damit erfüllt der Ventilstützkörper 10 gleichzeitig die Aufgabe einer Zentriereinrichtung, wozu der Ventilstützkörper 10 konzentrisch zum Ventilstößel 11 und zum trichterförmigen Ventilsitz 8 im Ventilgehäuse 17 ausgerichtet und vorzugsweise verstemmt gehalten ist. Die Umfangsfläche des Ventilstützkörpers 10 ist von mehreren mit Blendenbohrung versehenen Druckmittelübergangskanälen 1, 1' durchdrungen, die hubabhängig vom abgestuften Schaft des Ventilschließgliedes 4 nacheinander verschlossen werden können. Der stufenförmige Absatz des Ventilschließgliedes 4 übernimmt die Funktion einer Drossel. Damit läßt sich der ursprüngliche von der Ventilsitzöffnungsfläche bestimmte Durchlaß kaskadenförmig steuern, so daß in Abhängigkeit von den vom Ventilstößel 11 freigegebenen Druckmittelübergangkanälen 1, 1' eine Verkontinuierlichung des schaltbaren Druckmittelstromes eintritt. Als regelungstechnisch besonders vorteilhaft erweist sich hierbei die anhand der kegelförmigen Stirnflächen am Magnetanker 6 und Magnetkern 5 hervorgerufene Proportionalcharakteristik des Elektromagneten. Dies ermöglicht eine präzise Steuerung des Ventilstößelhubs und damit der Druckmitteldurchlässe 1,1' in Abhängigkeit eines variabel einstellbaren Ankerstroms. Damit wird einerseits die Regelgüte im Sinne eines gezielt beeinflußbaren Druckverlaufs erhöht, andererseits trägt die druckausgeglichene Ventilbauweise zur Minimierung der Stellkräfte und damit des Ankerstroms bei. Darüber hinaus ergibt sich ein regelungstechnisch verhältnismäßig einfacher Zusammenhang zwischen dem Ankerstrom und der stufenförmig frei zugebenden Durchlaßfläche.

Die Fig. 2 zeigt eine alternative Ausführungsform zur Anordnung und Gestaltung der Druckmittelübergangskanäle 1, 1' und 2 integriert im Ventilsitz 8. Zu diesem Zweck münden in den hohlzylinderförmigen Teil des Ventilsitzes 8 mehrere übereinander in einem definierten Abstand angeordnete Druckmittelübergangskanäle 1, 1' ein, die in der gezeigten Sperrstellung des am Ventilschließglied 4 angebrachten Tauchkolbens 9 von diesem völlig überdeckt werden. Dem hohlzylinderförmigen Abschnitt des Ventilsitzes 8 schließt sich die bereits aus Fig. 1 bekannte trichterförmige Ventilsitzfläche an, auf der der ballig geformte Abschnitt des Ventilschließgliedes 4 zur Anlage gelangt. Die übrigen zur Betätigung des Drucksteuerventils erforderlichen Bauteile entsprechen der konstruktiven Ausführung nach Fig. 1, weshalb auf eine nochmalige detailierte Gesamtdarstellung verzichtet und diesbezüglich auf Fig. 1 verwiesen werden darf. Analog zu Fig. 1 sind die Druckmittelübergangskanäle 1, 1' in Fig. 2 mit den die Durchflußrate kalibrierenden Blenden versehen. Die Ringnut 19 am Ventilsitz 8 stellt einen Verteilerraum für das bei geöffnetem Kegelsitz dem ersten Druckmittelübergangskanal zugeführten Druckmittel dar. Von dieser Ringnut 19 verteilt sich sodann das Druckmittel auf die übrigen beiden, mit Blenden versehenen Druckmittelübergangskanäle 1, 1', die über den vom Tauchkolben 9 verschließbaren hohlzylinderförmigen Abschnitt am Ventilsitz 8 in den zur Radbremse führenden Druckmittelanschluß 3 einmünden. Gemäß Fig. 2 befindet sich das Ventilschließglied 4 in der elektromagnetisch voll erregten Schließstellung, so daß alle Druckmittelübergangskanäle 1, 1' verschlossen sind. In der elektromagnetischen stromlos offenen Grundstellung des Ventils sind alle Druckmittelübergangskanäle 1, 1' vom Ventilschließglied freigegeben, so daß eine ungehinderte Verbindung zwischen dem ersten und dem zweiten Druckmittelanschluß 2, 3 besteht. Sobald das Ventilschließglied 4 eine Hubbewegung einleitet, werden der Reihe nach alle in den hohlzylinderförmigen Abschnitt des Ventilsitzes 8 einmündenden Druckmittelübergangskanäle 1, 1' von der Umfangsfläche des als Schieberventil wirksamen Tauchkolbens verschlossen, so daß infolge der Drosselbzw. Blendenwirkung den beiden Druckmittelübergangskanälen 1, 1' ein allmähliches kontinuierliches Abregeln des Druckmittelstromes erfolgt, bis schließlich auch der den Kegeldichtsitz mit der Ringnut 19 verbindender blendenfreie Druckmittelübergangskanal durch das Aufliegen des balligen Abschnittes des Ventilschließgliedes 4 am Ventilsitz 8 von dem oberhalb des Ventilschließgliedes 4 gelegenen zweiten Druckmittelanschluß 3 getrennt ist. Die stufenweise Öffnung der Druckmittelverbindung kann - wie bereits in Fig. 1 erwähnt - bei entsprechender Proportionalcharakteristik des Elektromagneten durch die Regelung des Ankerstroms maßgeblich im Druckverlaufsmuster beeinflußt werden, so daß bezüglich des Geräuschverhaltens eine eindeutige Verbesserung erzielt werden kann, die bezogen auf den speziellen Verwendungsfall für schlupfgeregelte Bremsanlagen in Kraftfahrzeugen zu einer wünschenswerten Komfortsteigerung führt.

### Bezugszeichenliste

- 1, 1': Druckmittelübergangskanäle
- 2: 1. Druckmittelanschluß
- 3: 2. Druckmittelanschluß
- 4: Ventilsschließglied
- 5: Magnetkern
- 6: Magnetanker
- 7: Feder
- 8, 8', 8'': Ventilsitz
- 9: Tauchkolben
- 10: Ventilstützkörper
- 11: Ventilstößel
- 12: 2. Druckraum
- 13: 1. Druckraum
- 14: Dichtelement
- 15: Druckfeder
- 16: Führungsteil
- 17: Ventilgehäuse
- 18: Bypasskanal
- 19: Ringnut

## Patentansprüche

1. Drucksteuerventil, insbesondere Elektromagnetventil für schlupfgeregelte Kraftfahrzeugbremsanlagen, mit einem in einem Ventilgehäuse (17) axial beweglich geführten Ventilschließglied (4), das in Abhängigkeit seiner gegenüber einem Ventilsitz (8) veränderbaren Position, einen Durchlaß zwischen einem ersten Druckmittelanschluß (2) und wenigstens einem zweiten Druckmittelanschluß (3) einzustellen vermag, mit unmittelbar nacheinander vom Ventilschließglied (4) zu verschließenden oder zu öffnenden Druckmittelübergangskanälen (1, 1'), die zwischen dem ersten und zweiten Druckmittelanschluß (2, 3) angeordnet sind und die einen veränderbaren Ventilöffnungsquerschnitt bilden, mit einem ersten Druckraum (13) und mit einem zweiten Druckraum (12), die voneinander durch Dichtelemente (14) und einem durch die Dichtelemente (14) hindurchgeführten Ventilstößel (11) getrennt sind, gekennzeichnet durch eine Bohrung in einem Führungsteil (16) zur Hindurchführung des Ventilstößels (11), wobei die Dichtelemente (14) gedichtet und radial beweglich auf dem Führungsteil (16) angeordnet sind, und durch einen Bypasskanal (18), der einen Druckausgleich zwischen dem ersten Druckraum (13) und dem zweiten Druckmittelauschluß (3) herstellt.

2. Drucksteuerventil nach Anspruch 1, dadurch **gekennzeichnet**, daß das Drucksteuerventil als elektromagnetisch steuerbares Proportionalventil ausgeführt ist, das durch Variation des Ankerstroms den Hub des Ventilschließgliedes (4) variabel einstellt.

3. Drucksteuerventil nach Anspruch 2, dadurch **gekennzeichnet**, daß als Gegenkraft zur Magnetankerkraft eine zwischen einem Magnetkern (5) und einem Magnetanker (6) eingespannte Feder (7) angeordnet ist.

4. Drucksteuerventil nach Anspruch 1, dadurch **gekennzeichnet**, daß die Druckmittelübergangskanäle (1, 1') über mehrere Ventilhubabschnitte verteilt sind und im wesentlichen senkrecht zur Ventilhubachse auf das Ventilschließglied (4) gerichtet sind.

5. Drucksteuerventil nach einem der vorhergehenden Ansprüche, dadurch **gekennzeichnet,** daß die Druckmittelübergangskanäle (1, 1') im Ventilsitz (8) angeordnet sind.

6. Drucksteuerventil nach einem der vorhergehenden Ansprüche, dadurch **gekennzeichnet**, daß ein mit einem Tauchkolben (9) versehenes und mit einem ballig geformten Abschnitt versehenes Ventilschließglied (4) am Ventilsitz (8) anlegbar geführt ist, wobei der ballige Abschnitt des Ventilschließgliedes (4) einen größeren Durchmesser aufweist als der Tauchkolben (9).

7. Drucksteuerventil nach Anspruch 5, dadurch **gekennzeichnet,** daß der Ventilsitz (8) aus einer ersten trichterförmig erweiterten Ventilsitzfläche (8') und aus einer zylinderförmigen zweiten Schieberventildichtfläche (8'') gebildet ist, die von mehreren übereinander angeordneten Druckmittelübergangskanälen (1, 1') durchdrungen ist.

8. Drucksteuerventil nach einem der vorhergehenden Ansprüche 1 bis 4, dadurch **gekennzeichnet,** daß die Druckmittelübergangskanäle (1, 1') in einem zum Ventilsitz (8) in Reihe geschalteten separaten Ventilstützkörper (10) angeordnet sind.

9. Drucksteuerventil nach einem der Ansprüche 1 bis 8, dadurch **gekennzeichnet,** daß die Druckmittelübergangskanäle (1, 1') mit Blenden und/oder Drosseln versehen sind.

## Claims

1. A pressure control valve, in particular an electromagnetic valve for slip-controlled brake systems for automotive vehicles, including a valve-closing member (4) which is axially movably guided in a valve housing (17) and which is capable of adjusting a passage between a first pressure agent connection (2) and at least one second pressure agent connection (3) depending on its position that is variable with respect to a valve seat (8), including pressure agent transition ducts (1, 1') to be shut off or to be opened directly one after the other by the valve-closing member (4) which are positioned between the first and the second pressure agent connections (2, 3) and form a variable cross-sectional area of the valve opening, including a first pressure chamber (13) and a second pressure chamber (12) which are isolated from each other by sealing elements (14) and a valve tappet (11) which extends through the sealing elements (14),
**characterized** by a bore in a guide element (16) for the valve tappet (11) to extend through, the sealing elements (14) being arranged so as to be sealed and radially movable on the guide element (16), and by a by-pass duct (18) which provides pressure balance between the first pressure chamber (13) and the second pressure agent connection (3).

2. A pressure control valve as claimed in claim 1,
**characterized** in that the pressure control valve is designed as an electromagnetically controllable proportional valve which variably adjusts the stroke of the valve-closing member (4) by a variation of the armature current.

3. A pressure control valve as claimed in claim 2,
**characterized** in that as a force counteracting the force of the magnet armature a spring (7) is arranged which is compressed between a magnet core (5) and a magnet armature (6).

4. A pressure control valve as claimed in claim 1,
**characterized** in that the pressure agent transition ducts (1, 1') are distributed over a plurality of valve stroke sections and are directed toward the valve-closing member (4) substantially at right angles to the axis of the valve stroke.

5. A pressure control valve as claimed in anyone of the preceding claims,
**characterized** in that the pressure agent transition ducts (1, 1') are positioned in the valve seat (8).

6. A pressure control valve as claimed in at least anyone of the preceding claims,
**characterized** in that a valve-closing member (4) being furnished with a plunger piston (9) and with a preferably spherical section is guided so as to be abuttable against the valve seat (8), the spherical section of the valve-closing member (4) having a larger diameter than the plunger piston (9).

7. A pressure control valve as claimed in claim 5,
**characterized** in that the valve seat (8) is composed of a first valve seat surface (8') which is flared funnel-shape and a cylindrical second slide valve sealing surface (8'') which is penetrated by a plurality of pressure agent transition ducts (1, 1') being disposed one above the other.

8. A pressure control valve as claimed in anyone of the preceding claims 1 to 4,
**characterized** in that the pressure agent transition ducts (1, 1') are positioned in a separate valve supporting element (10) which is arranged in series with respect to the valve seat (8).

9. A pressure control valve as claimed in anyone of the claims 1 to 8,
**characterized** in that the pressure agent transition ducts (1, 1') are furnished with orifices and/or restrictors.

## Revendications

1. Soupape modulatrice de pression, notamment soupape électromagnétique pour des systèmes de freinage de véhicules automobiles à glissement contrôlé, comprenant un obturateur de soupape (4) qui est guidé en déplacement axial dans un boîtier de soupape (17) et qui, en fonction de sa position variable par rapport à un siège de soupape (8), permet de régler un passage entre un premier branchement (2) de fluide sous pression et au moins un deuxième branchement (3) de fluide sous pression, comportant des canaux (1, 1') de transfert de fluide sous pression qui peuvent être directement et successivement fermés ou ouverts par l'obturateur de soupape (4), sont disposés entre le premier et le deuxième branchements (2, 3) de fluide sous pression et forment une section variable d'ouverture de soupape, et comportant une première chambre de pression (13) et une deuxième chambre de pression (12), qui sont séparées l'une de l'autre par des éléments d'étanchéité (14) et par un poussoir de soupape (11) traversant les éléments d'étanchéité (14),
**caractérisée** par un perçage ménagé dans une pièce de guidage (16) pour le passage du poussoir de soupape (11), les éléments d'étanchéité (14) étant disposés en étanchéité et en mobilité radiale sur la pièce de guidage (16), et par un canal de dérivation (18) qui réalise un équilibrage de pression entre la première chambre de pression (13) et le deuxième branchement (3) de fluide sous pression.

2. Soupape modulatrice de pression selon la revendication 1, **caractérisée** en ce que la soupape modulatrice de pression est réalisée sous forme de soupape proportionnelle à actionnement électromagnétique, qui règle de manière variable la course de l'obturateur de soupape (4) par variation du courant d'induit.

3. Soupape modulatrice de pression selon la revendication 2, **caractérisée** en ce qu'un ressort (7) est serré entre un noyau d'aimant (5) et un induit d'aimant (6) comme force antagoniste à la force d'induit d'aimant.

4. Soupape modulatrice de pression selon la revendication 1, **caractérisée** en ce que les canaux (1, 1') de transfert de fluide sous pression sont répartis sur plusieurs tronçons de la course de soupape et sont dirigés vers l'obturateur de soupape (4) sensiblement perpendiculairement à l'axe de la course de soupape.

5. Soupape modulatrice de pression selon l'une quelconque des revendications précédentes, **caractérisée** en ce que les canaux (1, 1') de transfert de fluide sous pression sont disposés dans le siège de soupape (8).

6. Soupape modulatrice de pression selon l'une quelconque des revendications précédentes, **caractérisée** en ce qu'un obturateur de soupape (4) pourvu d'un piston plongeur (9) et d'une partie de forme convexe peut être appliqué contre le siège de soupape (8), la partie convexe de l'obturateur de soupape (4) présentant un plus grand diamètre que le piston plongeur (9).

7. Soupape modulatrice de pression selon la revendication 5, **caractérisée** en ce que le siège de soupape (8) est formé d'une première face de siège de soupape (8') élargie en entonnoir et d'une deuxième face d'étanchéité de soupape à tiroir (8'') de forme cylindrique, qui est traversée par plusieurs canaux superposés (1, 1') de transfert de fluide sous pression.

8. Soupape modulatrice de pression selon l'une quelconque des revendications précédentes 1 à 4, **caractérisée** en ce que les canaux (1, 1') de transfert de fluide sous pression sont disposés dans un corps séparé (10) de soutien de soupape, monté en série avec le siège de soupape (8).

9. Soupape modulatrice de pression selon l'une quelconque des revendications 1 à 8, **caractérisée** en ce que les canaux (1, 1') de transfert de fluide sous pression sont pourvus de diaphragmes et/ou d'étranglements.
